Europäisches Patentamt

European Patent Office

Office européen des brevets

(19)

(11) Veröffentlichungsnummer: **0 349 529**
**B1**

(12) **EUROPÄISCHE PATENTSCHRIFT**

(45) Veröffentlichungstag der Patentschrift: 06.02.91

(51) Int. Cl.⁵: **B 60 C 23/04**, G 01 L 19/02

(21) Anmeldenummer: **87907738.6**

(22) Anmeldetag: **28.11.87**

(86) Internationale Anmeldenummer:
**PCT/DE87/00556**

(87) Internationale Veröffentlichungsnummer:
**WO 88/06982 22.09.88 Gazette 88/21**

(54) **DRUCKSENSOR.**

(30) Priorität: **19.03.87 DE 3708937**

(43) Veröffentlichungstag der Anmeldung:
**10.01.90 Patentblatt 90/02**

(45) Bekanntmachung des Hinweises auf die
Patenterteilung:
**06.02.91 Patentblatt 91/06**

(84) Benannte Vertragsstaaten:
**DE FR IT SE**

(56) Entgegenhaltungen:
**DE-A-3 523 774**
**US-A-4 167 726**

**Patent Abstracts of Japan, volume 8, no. 254,
(P315)(1691) 21 November 1984 & JP, A,
59125031 (Fuji Denki Seizo) 19 July 1984**

**Instruments & Control Systems, volume 48, no.
10, October 1975, R. Moskowitz et al: "Magnetic
fluids something to consider", pages 41-44 see
page 42, paragraph 2**

(73) Patentinhaber: **ROBERT BOSCH GMBH
Postfach 50
D-7000 Stuttgart 1 (DE)**

(72) Erfinder: **DOERFLER, Reiner
Maxplatz 7
D-8500 Nürnberg 1 (DE)**
Erfinder: **HETTICH, Gerhard
Martin-Renz-Strasse 8
D-8501 Dietenhofen (DE)**
Erfinder: **SCHMID, Hans-Dieter
Kamenzer Strasse 60
D-8500 Nürnberg 60 (DE)**

Courier Press, Leamington Spa, England.

## Beschreibung

### Stand der Technik

Die Erfindung geht aus von einem Drucksensor nach der Gattung des Hauptanspruchs.

Bei einem bekannten Drucksensor dieser Art (DE-OS 35 23 774) sind die Sensorelemente im äußeren Bereich eines Keramiksubstrates auf der dem Reifeninneren abgewandten Seite in einer entsprechenden stirnseitigen Ausnehmung des Sensorgehäuses angeordnet, wobei der Spalt zwischen dem Substrat mit den Sensorelementen und der Gehäuseausnehmung mit einem Silikon-Gel ausgefüllt ist. Das Silikon-Gel schützt einerseits die Sensorelemente und deren Anschlüsse und ermöglicht andererseits die Übertragung des Luftdrucks im Reifen und auf die Sensorelemente.

Unter bestimmten Bedingungen können hierbei jedoch an den Sensorelementen Meßverfälschungen auftreten, die durch Spannungszustände im Gel hervorgerufen werden. Solche Spannungszustände entstehen durch thermische Ausdehnung, Zentrifugalkräfte etc.

Mit der vorliegenden Erfindung wird angestrebt, die Meßgenauigkeit eines derartigen Drucksensors dadurch zu verbessern, daß Meßwertverfälschungen durch die Abdeckung der Sensorelemente weitgehend vermieden werden können.

### Vorteile der Erfindung

Die erfindungsgemäße Lösung mit den kennzeichnenden Merkmalen des Hauptanspruchs hat den Vorteil, daß innere Spannungszustände des die Sensorelemente abdeckenden Stoffes durch die Verwendung der magnetischen Flüssigkeit vermieden werden können. Damit wird sowohl die Meßgenauigkeit als auch die Reproduzierbarkeit und das Hystereseverhalten des Drucksensors verbessert. Durch die Magnetanordnung wird ferner sichergestellt, daß die Flüssigkeit gegen Schwer- und Zentrifugalkräfte sowie gegen allgemein am Fahrzeug auftretende Beschleunigungskräfte im Sensorbereich festgehalten wird. Außerdem wird dadurch die Übertragung des Luftdrucks auf die Sensorelemente nicht beeinträchtigt.

Eine besonders vorteilhafte Lösung ist darin zu sehen, daß der Dauermagnet ringförmig im Boden der ringförmigen Gehäuseaussparung für die magnetische Flüssigkeit eingebettet ist. Dies begünstigt eine einfache Herstellung des Sensorgehäuses und einfache Anbringung des Dauermagneten sowie ein gleichmäßiges Festhalten der elektrisch isolierenden magnetischen Flüssigkeit in der ringförmigen Gehäuseaussparung.

### Zeichnung

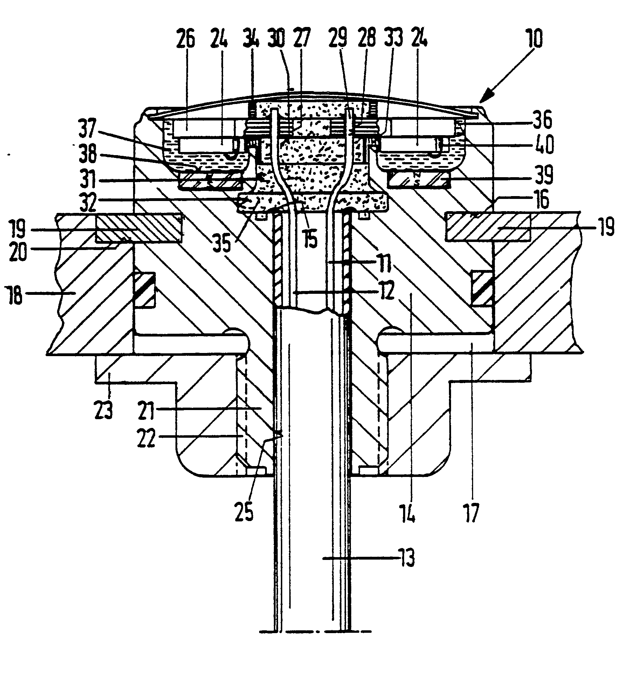

Ein Ausführungsbeispiel ist in der Zeichnung dargestellt und in der nachfolgenden Beschreibung näher erläutert. Die Figur zeigt einen Querschnitt durch einen Drucksensor, der in einer Felge eingesetzt ist.

### Beschreibung des Ausführungsbeispiels

In der Figur ist der Drucksensor zur Erfassung des Luftdrucks in einem Fahrzeugreifen mit 10 bezeichnet. Seine Anschlußleitungen 11, 12 sind in einem Edelstahl-Rohr 13 aufgenommen, dessen oberes Ende mit dem Gehäuse 14 des Drucksensors 10 mittels einer Schweißnaht 15 durch Laser verschweißt ist. Das Gehäuse 14 des Drucksensors 10 weist außen eine umlaufende Ringnut 16 auf. Bei der Montage wird das Gehäuse 14 von außen durch eine Bohrung 17 einer Fahrzeugfelge 18 eingeschoben, woraufhin von beiden Seiten Ringhalbscheiben 19 in die Ringnut 16 eingesetzt werden, welche radial nach außen durch eine Sackbohrung 20 an der Innenseite der Felgenbohrung 17 gesichert sind und dort so zu liegen kommen, daß die Oberseite mit der Außenfläche der Felge 18 bündig abschließt. In einem aus der Felgenbohrung 17 nach außen vorstehenden Bereich des Drucksensors 10 ist das Gehäuse 14 mit einem Gewindeansatz 21 versehen, das ein Außengewinde 22 trägt. Über diesen Gewindeansatz 21 ist eine Überwurfmutter 23 mit einem Innengewinde geschraubt, wobei die Überwurfmutter 23 die Felgenbohrung 17 außen übergreift und auf diese Weise ein Verspannen des Gehäuses 14 in der Felgenbohrung 17 mittels der Ringhalbscheiben 19 ermöglicht. Das Sensorgehäuse 14 dem Gewindeansatz 21 ist mit einer Längsbohrung 25 versehen, in welche das Rohr 13 eingreift.

Der Drucksensor 10 umfaßt zwei druckempfindliche Sensorelemente 24, welche im Bereich des Außenrandes eines diese tragenden Keramik-Substrates 26 befestigt sind. Bei diesen Sensorelementen 24 handelt es sich um an sich bekannte Halbleiter-Druckaufnehmer (vgl. Zeitschrift "Regelungstechnische Praxis, 1982, Heft 7, Seite 223), welche den Piezowiderstand zur Drucksignalbildung ausnutzen. Jedes Sensorelement 24 liefert also ein eigenes Druckwertsignal. Das Keramik-Substrat 26 hat eine gute Wärmeleitung und weist eine zentrale Bohrung 27 auf. Darüber hinaus ist eine Mehrzahl von Bohrungen 28 mit geringerem Durchmesser ebenfalls im zentralen Bereich um die zentrale Bohrung 27 herum vorgesehen. In diesen Bohrungen 28 sind die Enden 29 der Anschlußleitungen 11, 12 aufgenommen und mit Leiterbahnen 30 verlötet, welche auf dem Keramik-Substrat 26 aufgebracht sind und die Sensorelemente 24 mit den Anschlußleitungen 11, 12 verbinden.

Zur Befestigung des Keramik-Substrates 26 im Gehäuse 14 und zum mechanischen und elektrischen Schutz der Leiterbahnen 30 und der Sensorelemente 24 sowie der Kontaktierungsstellen ist vorn eine zentrale, dem inneren des Reifens zugewandte Ausnehmung 31 des Gehäuses 14 mit einer Hinterschneidung 32 vorgesehen. Das Keramiksubstrat 26 ist dabei an der Ausnehmung 31 mit einem Isolierstoffring 33 am Gehäuse 14 aufgenommen. Ein weiterer Isolierstoffring 34 ist an der Oberseite des Keramik-Substrats 26 angeordnet, der die zentrale Bohrung 27 sowie die Kontaktierungsstellen der Leiterenden 29 umgibt. Die Gehäuseausnehmung 31 mit der Hinterschneidung 32 sowie die Isolierstoffringe 33 und 34 und die zentrale Bohrung 27 des Keramik-Substrats 26 sind mit einem Epoxidharz 35 vergossen. Dies bedeutet, daß das Substrat 26 vom Gehäuse 14 thermisch gut isoliert, jedoch sowohl in radialer als auch in axialer Richtung durch das Epoxidharz 35 fest miteinander verbunden sind, ohne daß hierdurch Spannungen auf das Keramik-Substrat 26 übertragen werden.

Die Sensorelemente 24 sind auf der Rückseite, also auf der dem Reifeninneren abgewandten Seits des Keramiksubstrates 26 angeordnet. Im Bereich unterhalb der Sensorelemente 24 weist das Gehäuse 14 eine ringförmige Aussparung 36 auf, die mit einer nichtleitanden, magnetischen Flüssigkeit 37 gefüllt ist und damit die Sensorelemente 24 sowie deren angebondeten Anschlüsse 40 abdeckt und gegen die Luft im Fahrzeugreifen schützt. Gleichzeitig wird dadurch jedoch der Luftdruck im Fahrzeugreifen auf die Sensorelemente 24 übertragen. Um die magnetische Flüssigkeit 37 in der Aussparung 36 auch beim Auftreten von Schwer- und Zentrifugalkräften festzuhalten, ist am Boden 38 der Aussparung 36 ein Dauermagnet 39 angeordnet. Gleichmäßig auf die magnetische Flüssigkeit 37 wirkende Magnetkräfte werden dadurch erzielt, daß der Dauermagnet 39 ringförmig im Boden 38 der ringförmigen Gehäuseaussparung 36 eingesetzt ist. Die Magnetisierung des Dauermagneten 39 erfolgt hier in Achsrichtung des Drucksensors IO. Da je nach Anordnung des Drucksensors an der Felge 18 die in der magnetischen Flüssigkeit wirksamen Zentrifugalkräfte in verschiedenen Richtungen wirken können, ist es gegebenenfalls vorteilhaft, den Dauermagneten 39 zylindrisch auszubilden und in Radialrichtung zu magnetisieren.

## Patentansprüche

1. Drucksensor (10) zur Erfassung des Luftdrucks im Inneren von schlauchlosen Reifen von Kraftfahrzeugrädern, wobei der Drucksensor in einer Bohrung (17) des zum Reifeninneren gerichteten Bereichs einer Felge, (18) des Rades zu befestigen ist und ein Substrat (26) aufweist, das in einer den Reifeninneren zugewandten, stirnseitigen zentrischen Ausnehmung (31) eines Sensorgehäuses (14) eingesetzt ist und an dem wenigstens ein Sensorelement (24) im äußeren Bereich auf der dem Reifeninneren abgewandten Seite des Substrates angeordnet ist, dessen zentraler Bereich mit Anschlußleitern (II, 12) kontaktiert und in der zentrischen Ausnehmung des Sensorgehäuses befestigt ist, wobei unterhalb des wenigstens einen Sensorelementes im Sensorgehäuse eine umlaufende Aussparung (36) vorgesehen ist, dadurch gekennzeichnet, daß die umlaufende Aussparung (36) mit einer nichtleitenden, magnetischen Flüssigkeit (37) gefüllt und an ihrem Boden (38) ein Dauermagnet (39) so eingelassen ist, daß er die magnetische Flüssigkeit (37) zur druckspannungs- und fliehkraftfreien Abdeckung des mindestens einen Sensor-elementes (24) auf dem mindestens einen Sensorelement (24) gegenüberliegenden Boden (38) der Aussparung (36) festhält.

2. Drucksensor nach Anspruch 1, dadurch gekennzeichnet, daß der Dauermagnet (39) ringfömig im Boden (38) der ringförmig im Boden (38) der ringförmigen Gehäuseaussparung (36) eingesetzt ist.

3. Drucksensor nach Anspruch 1 oder 2, dadurch gekennzeichnet, daß der Dauermagnet (39) in Achsrichtung des Drucksensors (10) magnetisiert ist.

4. Drucksensor nach Anspruch 1 oder 2, dadurch gekennzeichnet, daß der Dauermagnet (39) in Radialrichtung magnetisiert ist.

## Revendications

1. Capteur de pression (10) servant à mesurer la pression de l'air à l'intérieur de pneus sans chambre montés avec une jante sur des roues de véhicule, le capteur de pression (10) étant fixé dans un trou (17) de la zone d'une jante (18) orientée vers l'intérieur du pneu et présentant un substrat (26), qui est inséré dans un évidement (31) frontal, tourné vers l'intérieur du pneu, d'un boîtier de capteur (14), sur lequel au moins un élément de capteur (24) est disposé dans la zone extérieure, sur la face opposée à l'intérieur du pneu, dont la zone centrale est mise en contact à l'aide de conducteurs de raccordement (11, 12) et qui est fixé dans l'évidement central du boîtier de capteur, un évidement (36) circulaire étant prévu dans la zone de boîtier située au-dessous au moins d'un élément de capteur (24), caractérisé en ce que l'évidement circulaire (36) est rempli d'un fluide magnétique (37), non conducteur, et que sur le fond (38) de l'évidement est introduit un aimant permanent (39), qui maintient, sans introduire de contraintes de compression ni de forces centrifuges, le liquide magnétique (37) en vue de lui faire recouvrir au moins l'élément de capteur (24) sur le fond (36) de l'évidement (36) qui est opposé à, au moins, un élément de capteur (24).

2. Capteur de pression selon la revendication 1, caractérisé en ce que l'aimant permanent (39) est inséré sous forme annulaire dans le fond (28) de l'évidement annulaire de boîtier (36).

3. Capteur de pression selon la revendication 1 ou 2, caractérisé en ce que l'aimant permanent (39) est magnétisé dans la direction axiale du capteur de pression (10).

4. Capteur de pression selon la revendication 1 ou 2, caractérisé en ce que l'aimant permanent (39) est magnétisé en direction radiale.

## Claims

1. Pressure probe (10) for sensing the air pressure in the interior of tubeless tyres of motor-vehicle wheels, in which arrangement the pressure probe is to be fixed in a bore (17) of the area, directed towards the tyre interior, of a rim (18) of the wheel and has a substrate (26) which is inserted in a front-end central aperture (31), facing the tyre interior, of a probe housing (14) and on which at least one probe element (24) is arranged in the outer area on the side of the substrate remote from the tyre interior, the central area of which probe element (24) is electrically bonded to connecting conductors (11, 12) and is fixed in the central aperture of the probe housing, an encircling recess (36) being provided below the at least one probe element in the probe housing, characterized in that the encircling recess (36) is filled with a non-conductive, magnetic fluid (37) and, at its base (38), a permanent magnet (39) is admitted in such a way that it retains the magnetic fluid (37) for covering, in a manner free from compressive stress and centrifugal force, the at least one probe element (24) on the base (38), opposite the at least one probe element (24), of the recess (36).

2. Pressure probe according to Claim 1, characterized in that the permanent magnet (39) is inserted in an annular manner in the base (38) of the annular housing recess (36).

3. Pressure probe according to Claim 1 or 2, characterized in that the permanent magnet (39) is magnetized in the axial direction of the pressure probe (10).

4. Pressure probe according to Claim 1 or 2, characterized in that the permanent magnet (39) is magnetized in the radial direction.

EP 0 349 529 B1

1